# EUROPEAN PATENT APPLICATION

(11) **EP 3 604 096 A1**
(43) Date of publication of application: **05.02.2020**
(21) Application number: 18776758.7
(22) Date of filing: 20.02.2018
(51) Int. Cl.: B62J 99/00, B62J 1/12, B62J 35/00, F02M 35/024, F02M 35/16

(54) **AIR CLEANER SUPPORT STRUCTURE OF SADDLE-TYPE VEHICLE**

(30) Priority: 28.03.2017 JP 2017063767
(71) Applicant: Honda Motor Co., Ltd., Tokyo 107-8556 (JP)
(72) Inventor: NAKAZAWA Hiroya, Wako-shi Saitama 351-0193 (JP); UZAWA Yuki, Wako-shi Saitama 351-0193 (JP)
(74) Representative: Dehns
(86) International application number: PCT/JP2018/005919
(87) International publication number: WO 2018/180008

(57) **Abstract**

Provided is an air cleaner support structure of a saddle-type vehicle that can increase the degree of freedom in designing a vehicle body frame and achieve a reduction in the number of parts and weight.

A motorcycle has an engine supported by a vehicle body frame 11, and an air cleaner 81 for purifying intake air to be supplied to the engine. The air cleaner 81 includes an air cleaner case 94, and an air cleaner element which is stored in the air cleaner case 94 and filters outside air sucked into the air cleaner case 94, wherein the air cleaner case 94 is locked to or supported in a floating manner by the vehicle body frame 11.

## Description

### [Technical Field]

The present invention relates to an air cleaner support structure of a saddle-type vehicle.

### [Background Art]

Conventionally, a structure where an air cleaner is supported by providing a vehicle body frame with an opening portion and a support member for fastening has been known (see, for example, Patent Literature 1).

### [Citation List]

### [Patent Literature]

[Patent Literature 1]
Japanese Patent Laid-Open No. 2007-32428

### [Summary of Invention]

### [Technical Problem]

According to Patent Literature 1, in the structure where an opening portion is provided to fasten the air cleaner to the vehicle body frame and a support member for fastening is provided, it is necessary to design the strength of the vehicle body frame on the premise of providing the opening portion and consider the degree of improvement in the strength of the vehicle body frame that can be made by adding the fastening member, and thus the degree of freedom in designing the vehicle body frame is limited, and there is also a possibility of an increase in the number of parts constituting the vehicle body frame and in weight.

Therefore, it is an object of the present invention to provide an air cleaner support structure of a saddle-type vehicle that can increase the degree of freedom in designing the vehicle body frame and reduce the number of parts and the weight.

### [Solution to Problem]

This description includes all of the contents of Japanese Patent Application No. 2017-063767 filed on March 28, 2017.

The present invention relates to an air cleaner support structure of a saddle-type vehicle having an engine (45) supported by a vehicle body frame (11), and an air cleaner (81) for purifying intake air to be supplied to the engine (45), wherein the air cleaner (81) includes an air cleaner case (94), and an air cleaner element (98) which is stored in the air cleaner case (94) and filters outside air sucked into the air cleaner case (94), wherein the air cleaner case (94) is locked to or supported in a floating manner by the vehicle body frame (11) .

According to the above invention, the air cleaner case (94) may include a pair of left and right projecting portions (95g) locked to or supported in a floating manner by the vehicle body frame (11), and a pressed portion (95j) located between the left and right projecting portions (95g) in a plan view and pressed from the vehicle body frame (11) side, wherein the projecting portions (95g) and the pressed portion (95j) are held from both sides in the vehicle body frame (11).

According to the present invention, the pressed portion (95j) may be formed in a recessed shape.

Moreover, according to the present invention, the pressed portion (95j) may have a flat portion (95s) in a bottom portion, and a protruding portion (95z) may be formed around the flat portion (95s).

Furthermore, according to the present invention, the projecting portion (95g) and the pressed portion (95j) may be arranged to overlap in a vehicle front-rear direction.

According to the present invention, the vehicle body frame (11) may include a frame member (88) for pressing the pressed portion (95j), and the frame member (88) may be formed along a surface of the air cleaner case (94).

Moreover, according to the present invention, the frame member (88) may be a seat support member.

Furthermore, according to the present invention, the frame member (88) may be a fuel tank support member.

According to the present invention, the air cleaner case (94) may be composed of a case body (91) including the projecting portions (95g) and the pressed portion (95j), and an air cleaner cover (92) for removably covering an opening portion (95a) provided in the case body (91), wherein the air cleaner element (98) may be removably attached near the opening portion (95a).

Moreover, according to the present invention, the air cleaner case (94) may include, in a front portion, an upper wall (95h) and a pair of left and right side walls (95e, 95e) extending downward from both edge portions in a vehicle width direction of the upper wall (95h), wherein a rib (97f) may be formed at the pressed portion (95j) so as to extend downward from the upper wall (95h) and connect the left and right side walls (95e, 95e) together in the vehicle width direction inside the air cleaner case (94).

### [Advantageous Effects of Invention]

The air cleaner of the present invention includes the air cleaner case, and the air cleaner element which is stored in the air cleaner case and filters outside air sucked into the air cleaner case. The air cleaner case is locked to or supported in a floating manner by a vehicle body frame but does not fasten the air cleaner to the vehicle body frame, and therefore it is possible to increase the degree of freedom in designing the vehicle body frame and achieve a reduction in the number of parts of the vehicle body frame and weight.

According to the above invention, the air cleaner case includes the pair of left and right projecting portions which are locked to or supported in a floating manner by the vehicle body frame, and the pressed portion which is located between the left and right projecting portions in a plan view and pressed from the vehicle body frame side, wherein the projecting portions and the pressed portion are held from both sides in the vehicle body frame. Thus, by just forming the projecting portions and the pressed portion having simple structures in the air cleaner case, it is possible to hold the air cleaner case from both sides and prevent an increase in the cost of the air cleaner case.

According to the above invention, since the pressed portion is formed in a recessed shape, it is possible to increase the rigidity of the pressed portion.

Moreover, according to the above invention, the pressed portion includes the flat portion in the bottom portion, and the protruding portion is formed around the flat portion, and thus the rigidity of the pressed portion can be further increased.

Furthermore, according to the above invention, since the projecting portion and the pressed portion are arranged to overlap in the vehicle front-rear direction, the air cleaner case can be stably held in a state in which the projecting portion and the pressed portion are held from both sides in the vehicle body frame.

According to the above invention, the vehicle body frame includes a frame member that presses the pressed portion, and the frame member is formed along the surface of the air cleaner case, and therefore it is possible to compact the arrangement of parts around the air cleaner case. Thus, it is possible to downsize the vehicle body.

Moreover, according to the above invention, the frame member is a seat support member, and the seat support member also serves as the pressing member of the air cleaner case, thereby making it possible to decrease the number of parts and reduce the cost.

According to the above invention, since the frame member is the fuel tank support member, it is possible to decrease the number of parts and reduce the cost.

According to the above invention, the air cleaner case is composed of the case main body including the projection portions and the pressed portion, and the air cleaner cover for removably covering an opening portion provided in the case body, wherein the air cleaner element is removably attached near the opening portion. Therefore, it is possible to remove the air cleaner cover and perform maintenance of the air cleaner element in a state in which the air cleaner case is held by the vehicle body frame.

According to the above invention, the air cleaner case includes, in a front portion, an upper wall and a pair of left and right side walls extending downward from both edge portions in the vehicle width direction of the upper wall, and an inner rib is formed in the pressed portion so as to extend downward from the upper wall and connect the left and right side walls together in the vehicle width direction inside the air cleaner case. Thus, the rigidity of the front portion including the pressed portion of the air cleaner case can be increased, and the force of holding the air cleaner case by the vehicle body frame can be supported by the rigidity.

### [Brief Description of Drawings]

[Figure 1] Figure 1 is a right side view of a motorcycle including an air cleaner according to the present invention.
[Figure 2] Figure 2 is a right side view showing the air cleaner disposed at an upper central portion of a vehicle body, and the periphery.
[Figure 3] Figure 3 is a cross-sectional view of the air cleaner and a connecting tube vertically cut along the width center in a vehicle width direction.
[Figure 4] Figure 4 is a perspective view showing a support structure of an air cleaner case.
[Figure 5] Figure 5 is a perspective view showing a front portion and a middle portion of an upper case.
[Figure 6] Figure 6 is a plan view showing the front portion and the middle portion of the upper case.
[Figure 7] Figure 7 is a perspective view inclined to show an inner surface of the upper case.
[Figure 8] Figure 8 is a perspective view showing a rear portion of the air cleaner case.
[Figure 9] Figure 9 is a perspective view as seen obliquely from the back of a rear fender to which the air cleaner case is fastened.
[Figure 10] Figure 10 is a perspective view showing a cross plate of a vehicle body frame, and the periphery.
[Figure 11] Figure 11 is a sectional view taken along line XI-XI of Figure 1.

### [Description of Embodiment]

Hereinafter, an embodiment of the present invention will be described with reference to the drawings. In the description, the directions indicated as front, rear, left, right, up and down are the same as the directions with respect to a vehicle body unless otherwise specified. Further, a reference sign FR shown in each drawing indicates the front side of the vehicle body, a reference sign UP indicates the upper side of the vehicle body, and a reference sign LH indicates the left side of the vehicle body.

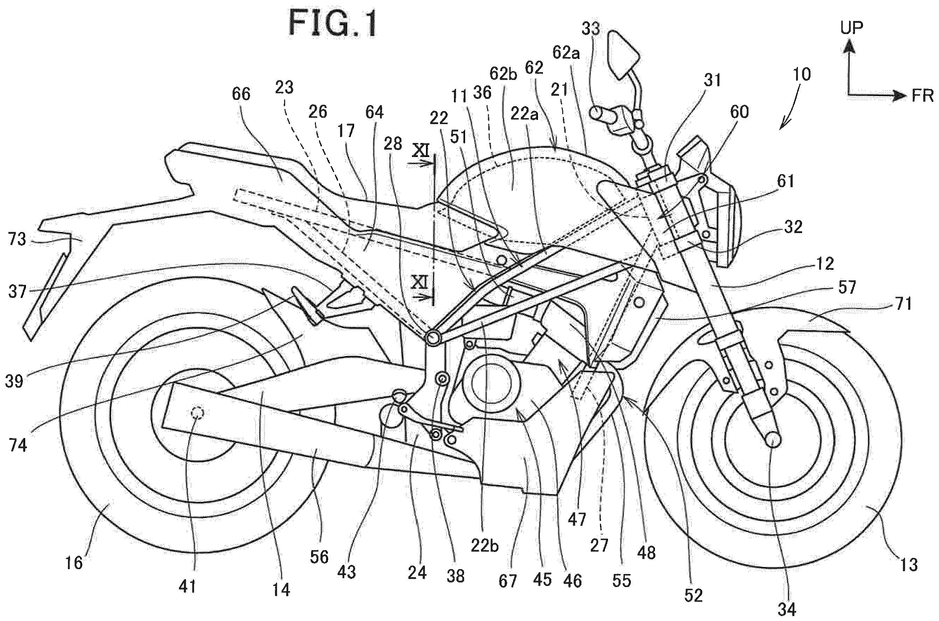

Figure 1 is a right side view of a motorcycle 10 including an air cleaner 81 according to the present invention.

The motorcycle 10 is a saddle-type vehicle including a vehicle body frame 11 as a frame.

A front fork 12 is supported to be movable in the up-down direction at a front portion of the vehicle body frame 11, and a front wheel 13 is supported at a lower end portion of the front fork 12. A swing arm 14 is supported to be swingable in the up-down direction at a lower portion of the vehicle body frame 11, and a rear wheel 16 is supported at a rear end portion of the swing arm 14. A seat 17 is supported above the vehicle body frame 11.

The vehicle body frame 11 includes a head pipe 21, a pair of left and right main frames 22, a pair of left and right seat rails 23, a pair of left and right pivot frames 24, a pair of left and right sub-frames 26, and a down frame 27.

The head pipe 21 is mounted at a front end portion of the vehicle body frame 11, and supports the front fork 12 rotatably. Each main frame 22 is composed of an upper frame 22a and a lower frame 22b located below the upper frame 22a, and the upper frame 22a and the lower frame 22b extend obliquely downward and rearward from the head pipe 21. The respective rear ends of the upper frame 22a and the lower frame 22b are connected to a connecting member 28.

Each seat rail 23 extends obliquely upward and rearward from the upper frame 22a of the main frame 22, and supports the seat 17. Each pivot frame 24 supports the connecting member 28 at the upper end, and extends downward from the connecting member 28 side. A pivot shaft 38 extending in the vehicle width direction is supported by the left and right pivot frames 24, and the swing arm 14 is supported to be swingable in the up-down direction on the pivot shaft 38. Each sub-frame 26 is connected to the connecting member 28 and a rear end portion of the seat rail 23. A step holder 37 is attached to the sub-frame 26, and a passenger step 39 is attached to the step holder 37. The down frame 27 extends obliquely downward and rearward from the head pipe 21, and supports an engine 45 to be described later.

The front fork 12 includes a top bridge 31 and a bottom bridge 32 which are disposed to be spaced from each other in the up-down direction and connect the left and right sides, and a bar handle 33 is attached to the top bridge 31. The front wheel 13 is supported through an axle 34 at the lower end portion of the front fork 12.

The rear wheel 16 is supported through an axle 41 at the rear end portion of the swing arm 14. Moreover, a driver step 43 is attached to the lower portions of the left and right pivot frames 24.

The left and right pivot frames 24 and the down frame 27 support the engine 45.

The engine 45 includes a crankcase 46 that houses a crankshaft (not shown), and a cylinder unit 47 that extends obliquely upward and frontward from a front portion of the crankcase 46. The cylinder unit 47 includes a cylinder head 48. An air intake device 51 is connected to a rear portion of the cylinder head 48, and an air exhaust device 52 is connected to the front portion of the cylinder head 48. The air exhaust device 52 includes an air exhaust pipe 55 connected to the cylinder head 48, and a muffler 56 connected to a rear end portion of the air exhaust pipe 55.

Radiators 57 are disposed respectively on the left and right sides of the down frame 27.

Each part of the motorcycle 10 is covered with a vehicle body cover 60.

The vehicle body cover 60 includes a front side cover 61, a tank cover 62, a side cover 64, a rear side covers 66, and an undercover 67. The covers other than the tank cover 62 of the vehicle body cover 60 are provided in a pair of the left and right sides.

The front side cover 61 covers the rear portion of the front fork 12, and the side of the front portion of the fuel tank 36. The tank cover 62 is composed of an upper cover 62a covering the upper portion and rear portion of the fuel tank 36, and a pair of left and right side-portion covers 62b covering the side portions of the fuel tank 36. The side cover 64 covers the sides of the seat rail 23 and the sub-frame 26. The rear side cover 66 covers the connecting portion between the seat rail 23 and the sub-frame 26, and the periphery. The undercover 67 covers the lower portion of the down frame 27 and the lower portion of the engine 45.

The front wheel 13 is covered with a front fender 71 from above. The rear wheel 16 is covered with a rear fender 73 from above, and covered with an inner fender 74 from an obliquely upper front direction.

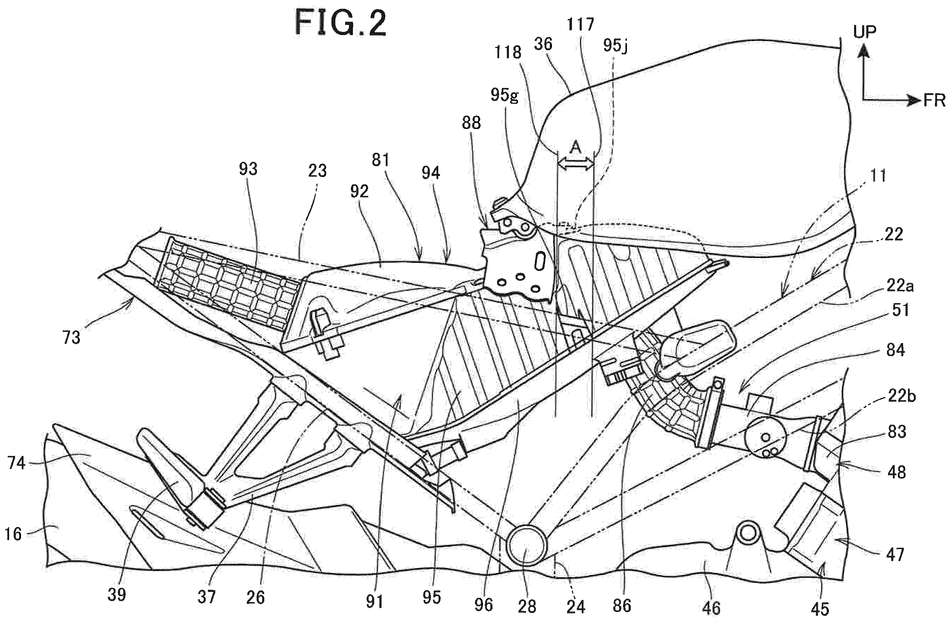

Figure 2 is a right side view showing the air cleaner 81 disposed at the upper central portion of the vehicle body, and the periphery. Figure 2 shows, relative to Figure 1, a state in which the seat 17, the tank cover 62, the side cover 64 and so on are removed.

The air cleaner 81 is disposed below the seat 17 (see Figure 1) and the fuel tank 36, and constitutes a part of the air intake device 51. The air intake device 51 includes an air intake connector 83 mounted on the rear portion of the cylinder head 48, a throttle body 84 connected to a rear end portion of the air intake connector 83, and the air cleaner 81 connected via a connecting tube 86 to the throttle body 84.

The air cleaner 81 is held by the respective portions of the vehicle body frame 11, and is also attached to the rear fender 73. That is, the air cleaner 81 is not fastened directly to the vehicle body frame 11, or brackets or the like attached to the vehicle body frame 11.

A front portion of the air cleaner 81 is held between the left and right seat rails 23 and a cross plate 88 passed across the left and right seat rails 23. The cross plate 88 is a part constituting the vehicle body frame 11, and supports the front end portion of the seat 17 (see Figure 1) and the rear end portion of the fuel tank 36.

The air cleaner 81 includes a case body 91 extending upward and forward, an air cleaner cover 92 removably attached to an upper rear portion of the case body 91, and an air inlet 93 attached to the air cleaner cover 92. The case body 91 and the air cleaner cover 92 constitute an air cleaner case 94.

The case body 91 is composed of an upper case 95, and a lower case 96 attached to a lower portion of the upper case 95. The upper case 95 is held between the left and right seat rails 23 and the cross plate 88. The connecting tube 86 is connected to the lower case 96. The air inlet 93 extends in a straight form obliquely upward and rearward from the rear end portion of the air cleaner cover 92.

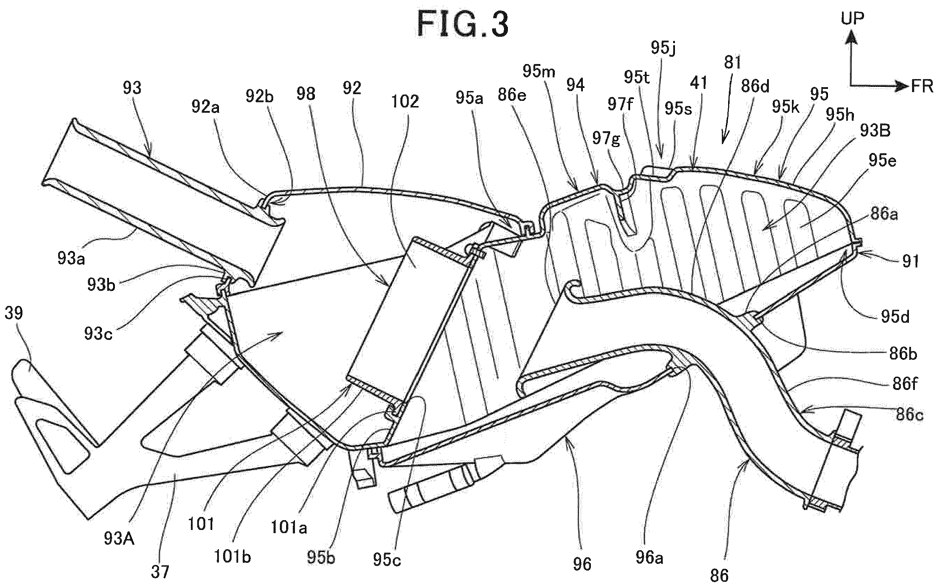

Figure 3 is a cross-sectional view of the air cleaner 81 and the connecting tube 86 vertically cut along the width center in the vehicle width direction.

The upper case 95 of the air cleaner case 94 has an upper opening 95a formed at an upper rear portion, and the air cleaner cover 92 is attached to close the upper opening 95a. The upper case 95 includes, below the upper opening 95a, an inclined wall 95b integrally formed to rise frontward. The inclined wall 95b has an inclined wall opening 95c, and an air cleaner element 98 for filtering air is removably attached to an edge portion of the inclined wall 95b to close the inclined wall opening 95c.

The air cleaner element 98 is composed of a frame portion 101 to be attached to the inclined wall 95b, and a filter paper 102 arranged in the frame portion 101 without a gap.

The frame portion 101 is composed of a base frame 101a to be attached to the inclined wall 95b, and an upright frame 101b integrally rising from the base frame 101a. The filter paper 102 formed in a wavy shape is arranged inside the upright frame 101b.

The upper case 95 has a lower opening 95d formed at a lower portion, and the lower case 96 is attached to an edge portion of the lower opening 95d to close the lower opening 95d.

The lower case 96 has a lower through-hole 96a penetrating through the inside and outside of the air cleaner case 94, and the connecting tube 86 made of resin is fitted into the lower through-hole 96a.

The connecting tube 86 has an annular flange portion 86a formed on an outer peripheral surface 86f at a middle portion in the longitudinal direction, and an annular groove 86b which is formed on the outer peripheral surface of the flange portion 86a is fitted to the edge of the lower through-hole 96a. A tube front portion 86c located on the front side of the flange portion 86a of the connecting tube 86 is disposed outside the air cleaner case 94, and a front end portion of the tube front portion 86c is connected to the throttle body 84 (see Figure 2). Further, a tube rear portion 86d located on the rear side of the flange portion 86a of the connecting tube 86 is disposed inside the air cleaner case 94, and a rear end opening 86e of the tube rear portion 86d is open in the inside of the air cleaner case 94.

The air cleaner cover 92 has a cover opening 92b formed on a rear wall 92a, and the air inlet 93 is fitted to an edge portion of the cover opening 92b. The air inlet 93 is a cylindrical part made of resin, and an annular flange portion 93b is formed on an outer peripheral surface 93a at a portion near the front end portion in the longitudinal direction. The flange portion 93b has an annular groove 93c formed on the outer peripheral surface, and the annular groove 93c is fitted to the edge of the cover opening 92b of the air cleaner cover 92.

In the space in the air cleaner case 94, a space located on the rear side of the inclined wall 95b of the upper case 95 and the air cleaner element 98 is a dirty side 93A where outside air is directly sucked in. In the space in the air cleaner case 94, a space located on the front side of the inclined wall 96b of the upper case 95 and the air cleaner element 98 is a clean side 93B where air filtered by the air cleaner element 98 is sucked in.

The rear end opening 86e of the connecting tube 86, the air cleaner element 98 and the air inlet 93 are arranged on a straight line.

Thus, by arranging the rear end opening 86e, the air cleaner element 98 and the air inlet 93 on a straight line, air can flow straight from the air inlet 93 to the rear end opening 86e of the connecting tube 86, and the suction efficiency can be improved.

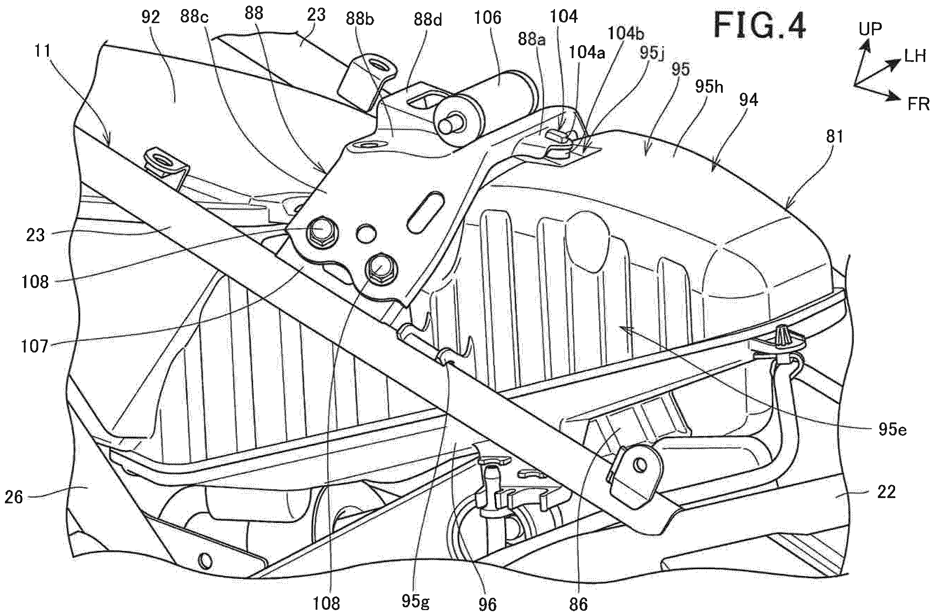

Figure 4 is a perspective view showing a support structure of the air cleaner case 94.

On the air cleaner case 94, specifically, on the left and right side walls 95e, 95e of the upper case 95 (only the side wall 95e in the foreground is shown), side projecting portions 95g, 95g projecting sideward are integrally formed (only the side projecting portion 95g in the foreground is shown), and a recessed portion 95j is formed on an upper wall 95h of the upper case 95.

The left and right side projecting portions 95g, 95g are abutted on the left and right seat rails 23, 23 from above. Moreover, the recessed portion 95j of the upper case 95 is pressed, via a cushion member 104, against the cross plate 88, specifically, a pressing portion 88a which is integrally formed to project forward from the front edge of the cross plate 88. That is, the upper case 95 is held (specifically, held from both sides) by two parts (the seat rails 23 and the cross plate 88) constituting the vehicle body frame 11.

The cushion member 104 is composed of an upper attachment portion 104a attached to the pressing portion 88a, and a contact portion 104b formed integrally under the upper attachment portion 104a. The contact portion 104b is the portion which abuts the recessed portion 95j of the upper case 95.

The cross plate 88 is integrally formed of an upper wall portion 88b located at the central portion in the vehicle width direction and a pair of left and right side inclined portions 88c, 88c extending obliquely sideward and downward from the left and right ends of the upper wall portion 88b.

On the upper wall portion 88b, a tank-rear-end support portion 106, which supports the rear end portion of the fuel tank 36 (see Figure 2) in a swingable manner, is attached, and a seat-front-end insertion portion 88d is formed behind the tank-rear-end support portion 106 to allow insertion of the front end portion of the seat 17 (see Figure 1).

The pressing portion 88a is formed on the cross plate 88 so as to press the recessed portion 95j of the air cleaner case 94 by the pressing portion 88a, but this does not impose a limitation, and it may be possible to attach the cushion member 104 directly to the upper wall portion 88b of the cross plate 88 and to press the recessed portion 95j via the cushion member 104.

The left and right side inclined portions 88c, 88c are removably attached by a plurality of bolts 108, 108 to cross-member support parts 107 which are fixed to the left and right seat rails 23, 23, respectively.

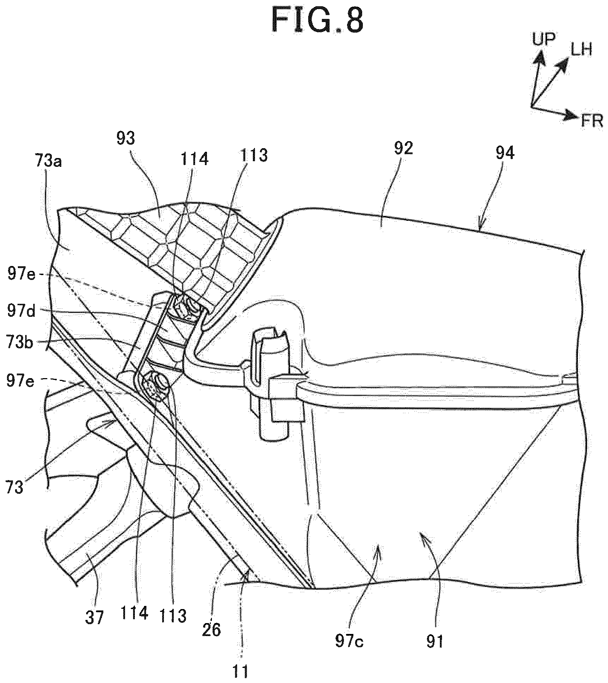

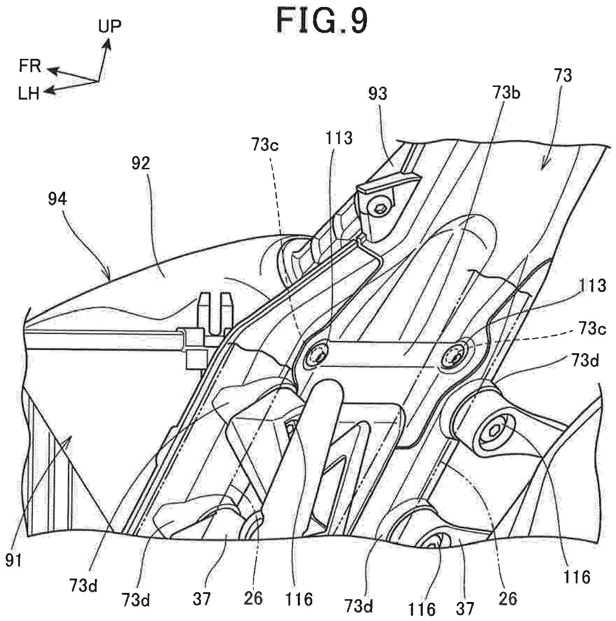

In order to hold the air cleaner case 94 by the vehicle body frame 11, in a state in which the cross plate 88 is removed from the left and right cross-member support parts 107, 107, first, the left and right side projecting portions 95g, 95g of the air cleaner case 94 are placed on the left and right seat rails 23, 23. Next, the cross plate 88 having the cushion member 104 attached to the pressing portion 88a is attached to the left and right the cross-member support parts 107 with a plurality of bolts 108, 108. Thus, the air cleaner case 94 is easily held by the vehicle body frame 11. Apart from this holding structure, the air cleaner case 94 is fastened to the rear fender 73. This fastening structure is described in detail in Figures 8 and 9.

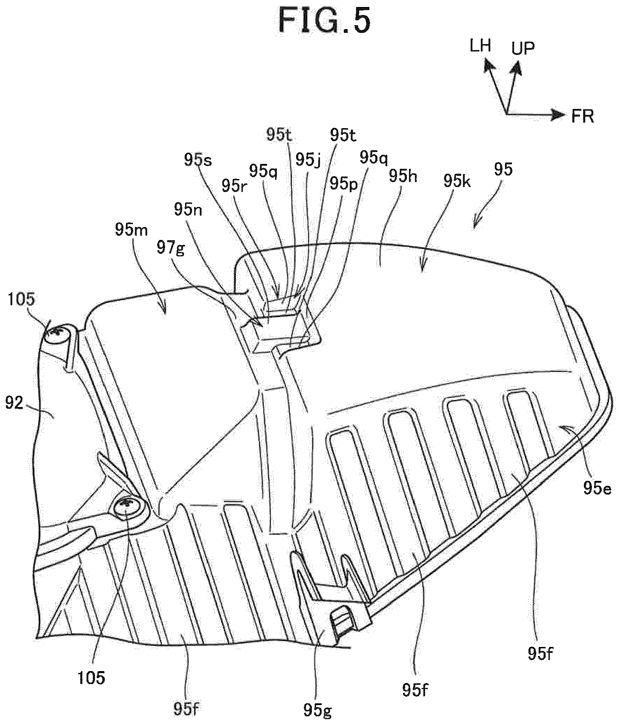

Figure 5 is a perspective view showing a front portion 95k and a middle portion 95m of the upper case 95.

The upper case 95 includes the front portion 95k having a mildly curved upper wall 95h, and the middle portion 95m which is formed to be lower than the front portion and adjacent to the rear side of the front portion 95k.

The recessed portion 95j of the upper case 95 includes a bottom wall 95n, a peripheral wall 95r composed of a front wall 95p and left and right side walls 95q, 95q raised from the front edge and left and right side edges of the bottom wall 95n, respectively, and a lateral groove 97g dent downward from a rear end portion of the bottom wall 95n and extending in the vehicle width direction. The bottom wall 95n is composed of a flat portion 95s extending in the front-rear direction, and a pair of left and right grooves 95t, 95t formed on the outside of the flat portion 95s in the vehicle width direction.

The flat portion 95s is a portion on which the contact portion 104b (see Figure 4) of the cushion member 104 (see Figure 4) is abutted, and extends from the front portion 95k to the middle portion 95m (specifically, the lateral grooves 97g).

The lateral groove 97g constitutes a front end portion of the middle portion 95m and is adjacent to the front portion 95k.

The middle portion 95m is a portion to be covered with the cross plate 88 (see Figure 4) from above, and has a rear end portion extending to a point just before a location on the upper case 95 where the air cleaner cover 92 is to be attached. The air cleaner cover 92 is attached to the upper case 95 with a plurality of screws 105.

A plurality of protruding portions 95f extending in the up-down direction are formed on most of the left and right side walls 95e, 95e of the upper case 95 (only the side wall 95e in the foreground is shown).

In Figure 3, an inner rib 97f extending downward is integrally formed at the middle portion 95m of the upper case 95, specifically, on the inner surface of the lateral groove 97g. The inner rib 97f is provided just below the lateral groove 97g of the recessed portion 95j, and is integrally formed to extend downward from the upper wall 97h and extend in the vehicle width direction across the left and right side walls 95e, 95e (only the side wall 95e behind is shown).

Thus, by providing the inner rib 97f, it is possible to increase the rigidity of the upper part of the front portion 95k and middle portion 95m of the upper case 95. Moreover, since the inner rib 97f is provided in the recessed portion 95j, it is possible to improve the support rigidity of the upper case 95 that supports the pressing load of the cross plate 88 pressing the recessed portion 95j (see Figure 4).

Further, as shown in Figures 3 and 5, the air cleaner case 94 is composed of the case body 91 including the side projecting portions 95g and the recessed portion 95j, and the air cleaner cover 92 that removably covers the upper opening 95a as an opening portion provided in the case body 91. The air cleaner element 98 is removably attached near the upper opening 95a.

According to this configuration, in a state in which the air cleaner case 94 is held by the vehicle body frame 11, it is possible to remove the air cleaner cover 92 and perform maintenance of the air cleaner element 98, thereby improving maintainability.

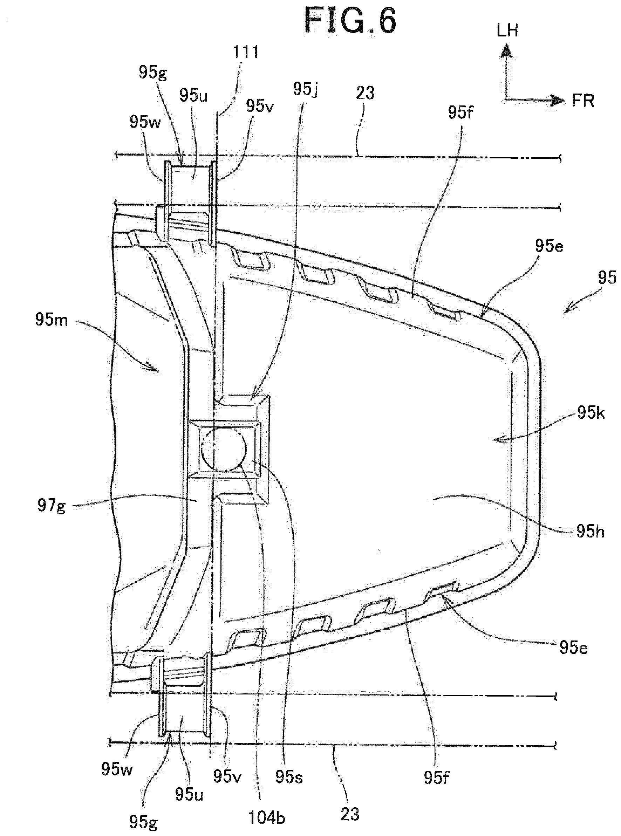

Figure 6 is a plan view showing the front portion 95k and the middle portion 95m of the upper case 95.

Each of the left and right side projecting portion 95g, 95g of the upper case 95 integrally includes a circular-arc-shaped contact portion 95u, which is formed to have a circular-arc cross sectional shape along the outer peripheral surface of the seat rail 23 made of a round pipe and is abutted on the seat rail 23, and circular-arc-shaped ribs 95v, 95w projecting radially outward from the front and rear edges of the circular-arc-shaped contact portion 95u. A straight line 111 extending in the vehicle width direction via the left and right front circular-arc-shaped ribs 95v, 95v overlaps the flat portion 95s of the recessed portion 95j.

That is, since the left and right side projecting portion 95g, 95g and the flat portion 95s of the recessed portion 95j are arranged on a straight line in the vehicle width direction, when the air cleaner case 94 is held by the vehicle body frame 11 (see Figure 4), a rotational force is not produced in the air cleaner case 94. Therefore, it is possible to stably hold the air cleaner case 94.

Further, in Figure 2, when vertical lines 117 and 118 which pass through the front and rear ends of the side projecting portion 95g are drawn respectively, a part of the recessed portion 95j is positioned within a range A in the front-rear direction with respect to the two vertical lines 117, 118. That is, the side projecting portion 95g and the recessed portion 95j are provided at positions overlapping in the front-rear direction of the vehicle in the side view.

As shown in Figures 1, 3 and 4, the motorcycle 10 as a saddle-type vehicle includes the engine 45 supported by the vehicle body frame 11, and the air cleaner 81 for purifying the intake air to be supplied to the engine 45.

The air cleaner 81 includes the air cleaner case 94 and the air cleaner element 98 which is stored in the air cleaner case 94 and filters the outside air sucked into the air cleaner case 94, and the air cleaner case 94 is locked to or supported in a floating manner by the vehicle body frame 11.

According to this configuration, since the air cleaner case 94 is not fastened to the vehicle body frame 11, it is possible to increase the degree of freedom in designing the vehicle body frame 11. Also, since there is no need to attach a bracket, weld a nut or process a screw hole so as to fasten the air cleaner case 94 to the vehicle body frame 11, it is possible to reduce the number of parts and the weight of the vehicle body frame 11.

Moreover, as shown in Figure 4, the air cleaner case 94 includes the side projecting portions 95g as the left and right projecting portions to be locked to or supported in a floating manner (abutted) on the vehicle body frame 11, and the recessed portion 95j as the pressed portion which is disposed between the left and right side projecting portions 95g in a plan view and pressed from the vehicle body frame 11 side. The side projecting portions 95g and the recessed portion 95j are held from both sides in the vehicle body frame 11.

According to this configuration, by only forming the side projecting portions 95g and the recessed portion 95j having simple structures in the air cleaner case 94, it is possible to hold the air cleaner case 94 from both sides and prevent an increase in the cost of the air cleaner case 94.

Furthermore, as shown in Figure 6, since the side projecting portions 95g and the recessed portion 95j are arranged to overlap in the front-rear direction of the vehicle, the air cleaner case 94 can be stably held in a state in which the side projecting portions 95g and the recessed portion 95j are held between the parts of the vehicle body frame 11.

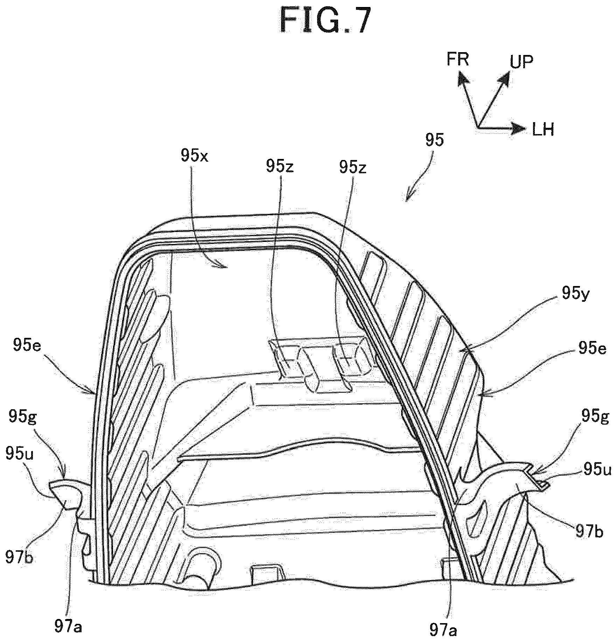

Figure 7 is a perspective view inclined to show the inner surface of the upper case 95.

On an inner surface 95x of the upper case 95, protruding portions 95z, 95z are formed at positions corresponding to the grooves 95t, 95t (see Figure 5) of the recessed portion 95j (see Figure 6) of an outer surface 95y of the upper case 95. Thus, by forming the protruding portions 95z, 95z projecting to the inner surface 95x side of the recessed portion 95j, it is possible to reinforce the recessed portion 95j. Consequently, it is possible to secure the strength and rigidity to withstand the pressing force received from the cross plate 88 side (see Figure 2).

The side projecting portions 95g, 95g include base portions 97a connected to the left and right side walls 95e, 95e of the upper case 95, and curved surfaces 97b formed on the lower side of the circular-arc-shaped contact portions 95u so as to abut on the seat rails 23. The circular-arc-shaped contact portion 95u and circular-arc-shaped ribs 95v, 95w are connected to the base portion 97a. Each curved surface 97b is formed in a shape along the surface of the seat rail 23 (see Figure 6). Thus, since the curved surface 97b is formed in the circular-arc-shaped contact portion 95u, when the side projecting portion 95g is placed on the seat rail 23, the side projecting portion 95g is hard to move relative to the seat rail 23 in the vehicle width direction, thereby facilitating positioning of the air cleaner case 94.

As shown in Figure 4, since the recessed portion 95j is formed in a recessed shape, it is possible to increase the rigidity of the recessed portion 95j.

Moreover, as shown in Figures 5 and 7, since the recessed portion 95j has the flat portion 95s in the bottom portion, and the protruding portions 95z are formed around the flat portion 95s, specifically to protrude to the inner surface 95x side of the recessed portion 95j, it is possible to further increase the rigidity of the recessed portion 95j.

Moreover, as shown in Figure 3, the air cleaner case 94, specifically, the upper case 95 includes, in the front portion, the upper wall 95h and a pair of left and right side walls 95e, 95e extending downward from both edge portions in the vehicle width direction of the upper wall 95h (see Figure 6). The inner rib 97f is formed at the recessed portion 95j to extend downward from the upper wall 95h inside the air cleaner case 94 and connect the left and right side walls 95e, 95e in the vehicle width direction.

According to this configuration, it is possible to improve the rigidity of the front portion of the air cleaner case 94 including the recessed portion 95j, and the force of holding the air cleaner case 94 by the vehicle body frame 11 can be supported by the rigidity.

Figure 8 is a perspective view showing a rear portion of the air cleaner case 94.

In a rear portion 97c located behind the middle portion 95m of the upper case 95 (see Figure 6), a case-rear-end flange 97d extending upward and rearward is formed at the rear end portion. In the case-rear-end flange 97d, a pair of left and right attachment holes 97e, 97e are formed at both end portions.

In the rear fender 73, a thick case-attachment portion 73b extending in the vehicle width direction is formed on an upper surface 73a near a portion where the step holder 37 is attached to each of the left and right sub-frames 26, 26 (only the sub-frame 26 in the foreground is shown). At both end portions of the case attachment portion 73b, a pair of left and right bolt insertion holes 73c, 73c are formed (see Figure 9).

The case-rear-end flange 97d is fastened to the rear fender 73 with bolts 113, 113 inserted through the bolt insertion holes 73c, 73c and the attachment holes 97e, 97e, and nuts 114, 114 screwed to the tips of the bolts 113, 113.

Thus, since the air cleaner case 94 is fastened to a resin part, specifically the rear fender 73, instead of the vehicle body frame 11, it is possible to increase the degree of freedom in molding the fastening part and reduce the cost by fastening the air cleaner case 94 to the resin part rather than to the vehicle body frame 11.

As described above, since the cross plate 88 is the fuel tank support member, it is possible to reduce the number of parts.

Figure 9 is a perspective view as seen obliquely from the back of the rear fender 73 to which the air cleaner case 94 is fastened.

The rear fender 73 and the left and right step holders 37, 37 are fastened to the left and right sub-frames 26, 26 with the bolts 116, 116, respectively. In the rear fender 73, a plurality of the pedestal portions 73d on which the step holders 37 are abutted are formed.

The bolts 113, 113 penetrating the case attachment portion 73b of the rear fender 73 are positioned close to the bolts 116,116 penetrating the pedestal portions 73d of the rear fender 73. Specifically, the bolts 113, 113 are positioned more inward in the vehicle width direction relative to the bolts 116, 116 and on the further rear end side of the rear fender 73 relative to the bolt 116, 116.

Thus, the case attachment portion 73b for attaching the air cleaner case 94 to the rear fender 73 is provided close to the pedestal portions 73d, 73d for attaching the rear fender 73 and the step holders 37, 37 to the sub-frames 26, 26. Hence, by providing the case attachment portion 73b close to the pedestal portions 73d having increased support rigidity by being supported by the sub-frames 26, even the rear fender 73 made of resin can firmly support the air cleaner case 94.

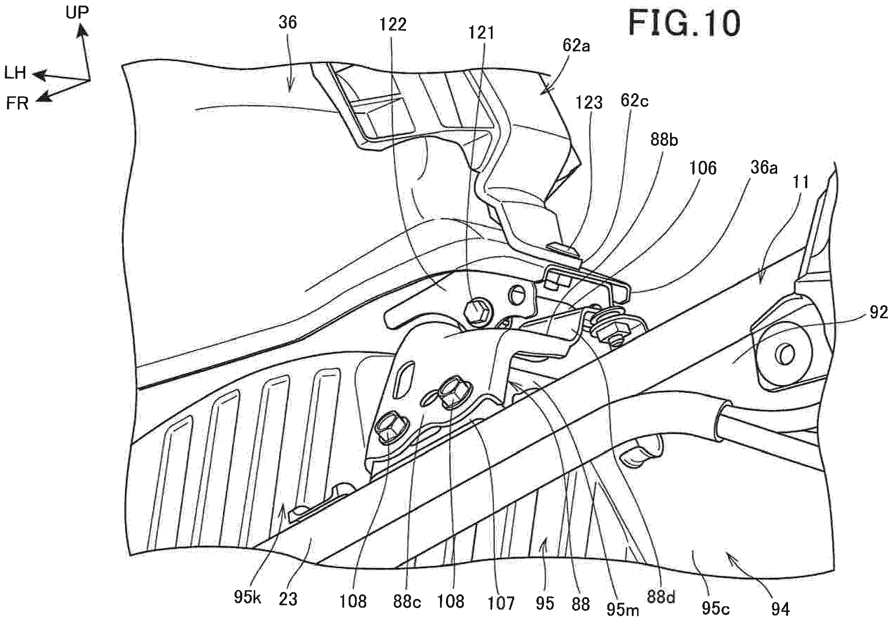

Figure 10 is a perspective view showing the cross plate 88 of the vehicle body frame 11, and the periphery.

In the tank-rear-end support portion 106 provided on the upper wall portion 88b of the cross plate 88, a support shaft 121 formed of a bolt is mounted, and a tank support bracket 122 is supported in a swingable manner by the support shaft 121. Moreover, a tank-rear-end projecting portion 36a of the fuel tank 36 is attached to the tank support bracket 122 with a bolt 123. The tank-rear-end projecting portion 36a is formed at the rear end portion of the fuel tank 36 so as to project rearward. A rear end portion 62c of the upper cover 62a covering the rear portion and upper portion of the fuel tank 36 is fastened to the tank support bracket 122 with the bolt 123.

Thus, since the cross plate 88 holds the air cleaner case 94 and also supports the rear end portion of the fuel tank 36 and the front end portion of the seat 17 (see Figure 1), it is possible to decrease the number of parts and reduce the cost.

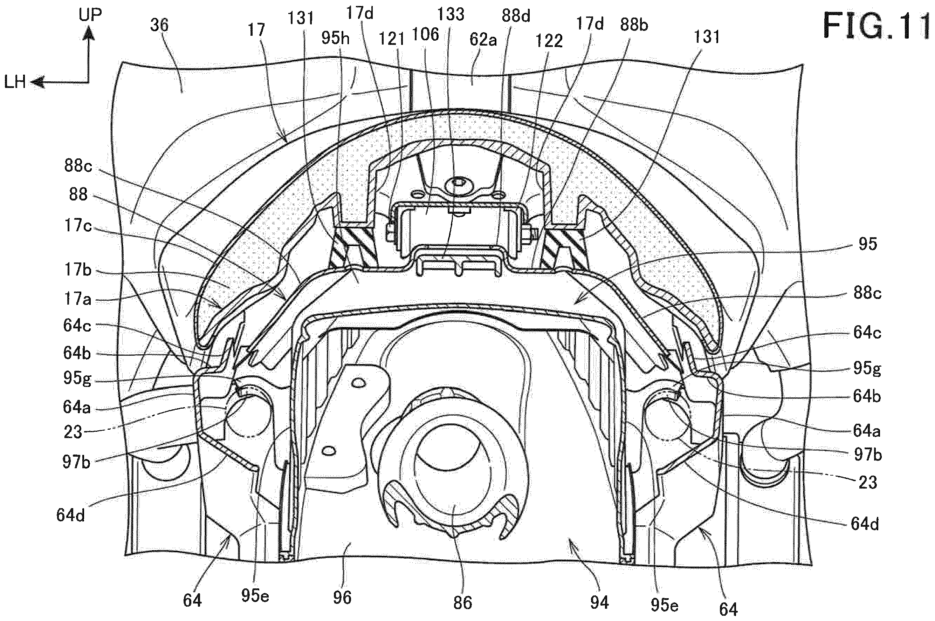

Figure 11 is a sectional view taken along line XI-XI of Figure 1.

The seat 17 is composed of a base plate 17a made of resin, a cushioning material 17b disposed above the base plate 17a, and a skin 17c which covers the upper surface of the cushioning material 17b and has a peripheral edge portion fixed to the edge portion of the base plate 17a. A pair of left and right downward projecting portions 17d, 17d projecting downward are provided at the front portion of the base plate 17a, and the left and right downward projecting portions 17d, 17d are abutted on the upper wall portion 88b of the cross plate 88 via elastic bodies 131, 131 made of rubber. Further, a front-end locking portion 133, which is provided on the base plate 17a to project forward, is inserted into the seat-front-end insertion portion 88d of the cross plate 88. Thus, the front end portion of the seat 17 is fixed by holding the cross plate 88 between the left and right downward projecting portions 17d, 17d of the seat 17 and the front-end locking portion 133.

The cross plate 88 is disposed along the air cleaner case 94, specifically the upper portion of the upper case 95, and is located above and spaced apart from the upper case 95.

The left and right side covers 64, 64, which are formed in a shape to avoid interference with the left and right seat rails 23, 23, are disposed on the sides of the left and right side projecting portions 95g, 95g of the air cleaner case 94. Each side cover 64 includes a vertically extending wall 64a, an upper wall 64b, an upper inclined wall 64c, and a lower inclined wall 64d.

The vertically extending wall 64a extends in the up-down direction beside the seat rail 23. An upper edge of the vertically extending wall 64a is located higher than the seat rail 23, and an upper wall 65b extends inward in the vehicle width direction from the upper edge of the vertically extending wall 64a. An upper inclined wall 64c extends obliquely upward from an upper edge of the upper wall 64b toward the inside of the vehicle body. The lower inclined wall 64d extends obliquely downward from a lower edge of the vertically extending wall 64a toward the inside of the vehicle body up to the lower side of the seat rail 23.

The curved surfaces 97b are formed on the right and left side projecting portions 95g, 95g, respectively, of the upper case 95, and the curved surfaces 97b, 97b can be abutted along the surfaces of the seat rails 23. Hence, it is possible to perform positioning of the upper case 95 in the up-down direction and the vehicle width direction and reduce rattling of the air cleaner case 94.

As shown in Figures 4 and 11, the vehicle body frame 11 has the cross plate 88 as a frame member for pressing the recessed portion 95j, and the cross plate 88 is formed along the surface of the air cleaner case 94.

According to this configuration, by arranging the cross plate 88 along the surface of the air cleaner case 94, the arrangement of parts around the air cleaner case 94 can be made compact. Thus, it is possible to downsize the vehicle body.

Moreover, since the cross plate 88 is the seat support member, the cross plate 88 also serves as a pressing member of the air cleaner case 94, thereby allowing a reduction in the number of parts.

The above-described embodiment merely illustrates one embodiment of the present invention, and can be arbitrarily modified and applied in a range without departing from the scope of the present invention.

The present invention is not necessarily applied to the motorcycle 10, and is also applicable to saddle-type vehicles, which also include saddle-type vehicles other than the motorcycle 10. The saddle-type vehicles include general vehicles which the drivers ride astride the vehicle body, and include not only motorcycles (including motorized bicycles), but also three-wheeled vehicles and four-wheeled vehicles classified into ATV (all-terrain vehicles).

### [Reference Sings List]

- 10: Motorcycle (Saddle-type vehicle)
- 11: Vehicle body frame
- 45: Engine
- 81: Air cleaner
- 88: Cross plate (Frame member)
- 88a: Pressing portion
- 91: Case body
- 92: Air cleaner cover
- 94: Air cleaner case
- 95a: Upper opening (Opening portion)
- 95e: Side wall
- 95g: Side projecting portion (Projecting portion)
- 95h: Upper wall
- 95j: Recessed portion (Pressed portion)
- 95z: Protruding portion
- 97f: Inner rib (Rib)
- 98: Air cleaner element

## Claims

1. An air cleaner support structure of a saddle-type vehicle having an engine (45) supported by a vehicle body frame (11), and an air cleaner (81) for purifying intake air to be supplied to the engine (45), wherein
the air cleaner (81) comprises an air cleaner case (94), and an air cleaner element (98) which is stored in the air cleaner case (94) and filters outside air sucked into the air cleaner case (94), wherein
the air cleaner case (94) is locked to or supported in a floating manner by the vehicle body frame (11).

2. The air cleaner support structure of the saddle-type vehicle according to claim 1, wherein the air cleaner case (94) includes a pair of left and right projecting portions (95g) locked to or supported in a floating manner by the vehicle body frame (11), and a pressed portion (95j) located between the left and right projecting portions (95g) in a plan view and pressed from the vehicle body frame (11) side, wherein the projecting portions (95g) and the pressed portion (95j) are held from both sides in the vehicle body frame (11).

3. The air cleaner support structure of the saddle-type vehicle according to claim 2, wherein the pressed portion (95j) is formed in a recessed shape.

4. The air cleaner support structure of the saddle-type vehicle according to claim 2 or 3, wherein the pressed portion (95j) has a flat portion (95s) in a bottom portion, and a protruding portion (95z) is formed around the flat portion (95s).

5. The air cleaner support structure of the saddle-type vehicle according to any one of claims 2 to 4, wherein the projecting portion (95g) and the pressed portion (95j) are arranged to overlap in a vehicle front-rear direction.

6. The air cleaner support structure of the saddle-type vehicle according to any one of claims 2 to 5, wherein the vehicle body frame (11) comprises a frame member (88) for pressing the pressed portion (95j), and the frame member (88) is formed along a surface of the air cleaner case (94).

7. The air cleaner support structure of the saddle-type vehicle according to any one of claims 2 to 6, wherein the frame member (88) is a seat support member.

8. The air cleaner support structure of the saddle-type vehicle according to any one of claims 2 to 7, wherein the frame member (88) is a fuel tank support member.

9. The air cleaner support structure of the saddle-type vehicle according to any one of claims 2 to 8, wherein the air cleaner case (94) is composed of a case body (91) including the projecting portions (95g) and the pressed portion (95j), and an air cleaner cover (92) for removably covering an opening portion (95a) provided in the case body (91), and wherein the air cleaner element (98) is removably attached near the opening portion (95a).

10. The air cleaner support structure of the saddle-type vehicle according to any one of claims 2 to 9, wherein the air cleaner case (94) includes, in a front portion, an upper wall (95h) and a pair of left and right side walls (95e, 95e) extending downward from both edge portions in a vehicle width direction of the upper wall (95h), and wherein a rib (97f) is formed in the pressed portion (95j) so as to extend downward from the upper wall (95h) and connect the left and right side walls (95e, 95e) together inside the air cleaner case (94).

## Amended claims

### Amended claims under Art. 19.1 PCT

1. (Amended) An air cleaner support structure of a saddle-type vehicle having an engine (45) supported by a vehicle body frame (11), and an air cleaner (81) for purifying intake air to be supplied to the engine (45), wherein
the air cleaner (81) comprises an air cleaner case (94), and an air cleaner element (98) which is stored in the air cleaner case (94) and filters outside air sucked into the air cleaner case (94), and
the air cleaner case (94) includes a pair of left and right projecting portions (95g) locked to the vehicle body frame (11), and a pressed portion (95j) which is located between the left and right projecting portions (95g) in a plan view and pressed from the vehicle body frame (11) side, wherein the projecting portions (95g) and the pressed portion (95j) are held from both sides in the vehicle body frame (11).

2. (Amended) The air cleaner support structure of the saddle-type vehicle according to claim 1, wherein the pressed portion (95j) is formed in a recessed shape.

3. (Amended) The air cleaner support structure of the saddle-type vehicle according to claim 1 or 2, wherein the pressed portion (95j) has a flat portion (95s) in a bottom portion, and a protruding portion (95z) is formed around the flat portion (95s).

4. (Amended) The air cleaner support structure of the saddle-type vehicle according to any one of claims 1 to 3, wherein the projecting portion (95g) and the pressed portion (95j) are arranged to overlap in a vehicle front-rear direction.

5. (Amended) The air cleaner support structure of the saddle-type vehicle according to any one of claims 1 to 4, wherein the vehicle body frame (11) comprises a frame member (88) for pressing the pressed portion (95j), and the frame member (88) is formed along a surface of the air cleaner case (94).

6. (Amended) The air cleaner support structure of the saddle-type vehicle according to claims 5, wherein the frame member (88) is a seat support member.

7. (Amended) The air cleaner support structure of the saddle-type vehicle according to claim 5 or 6, wherein the frame member (88) is a fuel tank support member.

8. (Amended) The air cleaner support structure of the saddle-type vehicle according to any one of claims 1 to 7, wherein the air cleaner case (94) is composed of a case body (91) including the projecting portions (95g) and the pressed portion (95j), and an air cleaner cover (92) for removably covering an opening portion (95a) provided in the case body (91), and wherein the air cleaner element (98) is removably attached near the opening portion (95a).

9. (Amended) The air cleaner support structure of the saddle-type vehicle according to any one of claims 1 to 8, wherein the air cleaner case (94) includes, in a front portion, an upper wall (95h) and a pair of left and right side walls (95e, 95e) extending downward from both edge portions in a vehicle width direction of the upper wall (95h), and wherein a rib (97f) is formed in the pressed portion (95j) so as to extend downward from the upper wall (95h) and connect the left and right side walls (95e, 95e) together inside the air cleaner case (94).

10. (deleted)

Statement under Art. 19.1 PCT
An amendment to Claim 1 was made on the basis of the disclosure in Claim 2, paragraphs [0041] and [0042] of the Description, and Figure 4 of the originally filed application.

Claim 2 of the originally filed application was deleted.

Claims 3 to 10 of the originally filed application were amended to be new (amended) Claims 2 to 9, respectively.

In new (amended) Claims 2 to 9, the base claims on which these claims depend were amended. Claim 10 of the originally filed application was deleted by replacing Claim 10 for new (amended) Claim 9.
